# FASCICULE DE BREVET EUROPEEN

(11) **EP 3 643 552 B1**
(45) Date de publication et mention de la délivrance du brevet: **18.05.2022**
(21) Numéro de dépôt: 19204936.9
(22) Date de dépôt: 23.10.2019
(51) Int. Cl.: B60K 35/00, G02B 27/01

(54) **PROCÉDÉ D'AIDE À LA CONDUITE, SYSTÈME ET VÉHICULE ASSOCIÉS**
FAHRASSISTENZVERFAHREN, ENTSPRECHENDES SYSTEM UND FAHRZEUG
METHOD FOR DRIVING ASSISTANCE, ASSOCIATED SYSTEM AND VEHICLE

(30) Priorité: 24.10.2018 FR 1859817
(43) Date de publication de la demande: 29.04.2020
(73) Titulaire: Institut de Recherche Technologique SystemX, 91120 Palaiseau (FR); Valeo Comfort and Driving Assistance, 94046 Créteil Cedex (FR); Renault s.a.s, 92100 Boulogne Billancourt (FR)
(72) Inventeur: DELAHAYE, Vincent, 94046 CRETEIL cedex (FR); LANGLOIS, Sabine, 75015 PARIS (FR)
(74) Mandataire: Lavoix

(56) Documents cités:
- WO-A1-2017/138527
- DE-A1-102011 081 370
- FR-A1- 3 064 372

## Description

La présente invention concerne un procédé d'aide à la conduite. L'invention se rapporte également à un système d'aide à la conduite et un véhicule associés.

Dans le domaine de la sécurité routière, des dispositifs d'affichage sont configurés pour aider à la conduite du conducteur en affichant de l'information pertinente pour la conduite du véhicule du type d'afficheur tête haute ou de lunettes de réalité augmentée.

Le document FR 3 064 372 A1 décrit un dispositif d'assistance à la conduite en réalité augmentée d'un véhicule.

Toutefois, en pratique l'affichage n'est pas optimal puisqu'il est constaté que le conducteur manque des informations qui sont pertinentes pour la conduite et peut être amené à prendre ainsi des décisions erronées ou à un moment inopportun. Ceci résulte en un danger pour le conducteur.

Il existe donc un besoin pour un procédé et un système d'aide à la conduite d'un véhicule qui permet d'améliorer la sécurité du conducteur.

Pour cela, la présente invention porte sur un procédé d'aide à la conduite d'un véhicule comprenant un dispositif d'affichage. Ce procédé comprend au moins les étapes d'acquisition d'un premier paramètre relatif à une trajectoire court terme du véhicule, la trajectoire court terme étant la trajectoire suivie par le véhicule dans un intervalle de temps présentant une durée d'au plus 10 secondes, préférablement au plus 5 secondes, de mesure d'un deuxième paramètre relatif à la densité du trafic dans l'environnement du véhicule, de calcul d'une première coordonnée selon une première direction sur le dispositif d'affichage comme étant le résultat d'une première fonction appliquée au premier paramètre, de détermination d'une deuxième coordonnée selon une deuxième direction sur le dispositif d'affichage comme étant le résultat d'une deuxième fonction appliquée au deuxième paramètre, la deuxième direction étant perpendiculaire à la première direction, et d'affichage d'une information d'aide à la conduite à une position d'affichage sur le dispositif d'affichage, la position d'affichage ayant pour coordonnées la première coordonnée selon la première direction et la deuxième coordonnée selon la deuxième direction.

Suivant des modes de réalisation particuliers, le procédé d'aide à la conduite comprend en plus une ou plusieurs des caractéristiques suivantes, prise(s) isolément ou suivant toutes les combinaisons techniquement possibles :
- le premier paramètre est au moins l'un parmi une direction de regard calculée du conducteur et un angle de braquage du véhicule.
- le deuxième paramètre est au moins l'un parmi une distance du véhicule à un autre usager de la route situé devant le véhicule et la vitesse du véhicule.
- le véhicule suit un virage correspondant à une direction de virage choisie parmi un virage à droite et un virage à gauche, la première coordonnée est décalée en suivant la direction de virage.
- la deuxième fonction est telle que lorsque la densité du trafic diminue, la deuxième coordonnée se déplace, suivant la deuxième direction, d'une première position à une deuxième position supérieure à la première position par rapport à un plan de roulement dans lequel le véhicule est destiné à circuler. Lorsque la densité du trafic augmente, la deuxième coordonnée se déplace, suivant la deuxième direction, selon la deuxième fonction, d'une troisième position à une quatrième position inférieure à la troisième position par rapport au plan de roulement.
- le premier paramètre est une mesure acquise par un capteur d'images et dans lequel le deuxième paramètre est une mesure acquise par une unité d'observation configurée pour mesurer une distance du véhicule à un autre usager de la route situé devant le véhicule.
- le premier paramètre est issu d'un dispositif de mesure configuré pour mesurer l'angle de braquage et le deuxième paramètre est issu d'un capteur de vitesse configuré pour mesurer la vitesse du véhicule.

La présente invention se rapporte également à un système d'aide à la conduite d'un conducteur d'un véhicule comprenant un dispositif d'affichage. Ce système d'aide à la conduite comprend un premier ensemble de capteurs propre à acquérir un premier paramètre relatif à une trajectoire court terme du véhicule, la trajectoire court terme étant la trajectoire suivie par le véhicule dans un intervalle de temps présentant une durée d'au plus 10 secondes, préférablement au plus 5 secondes, un deuxième ensemble de capteurs propre à acquérir un deuxième paramètre relatif à la densité du trafic, et un calculateur configuré pour calculer une première coordonnée selon une première direction sur le dispositif d'affichage comme étant le résultat d'une première fonction appliquée au premier paramètre, le calculateur étant, en outre, configuré pour calculer une deuxième coordonnée selon une deuxième direction sur le dispositif d'affichage comme étant le résultat d'une deuxième fonction appliquée au deuxième paramètre, la deuxième direction étant perpendiculaire à la première direction. Le dispositif d'affichage est configuré pour afficher une information d'aide à la conduite à une position d'affichage sur le dispositif d'affichage, la position d'affichage, ayant pour coordonnées la première coordonnée selon la première direction et la deuxième coordonnée selon la deuxième direction.

La présente invention concerne aussi un véhicule comprenant un système d'aide à la conduite.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un véhicule et d'un système d'aide à la conduite du véhicule selon un premier mode de réalisation,
- figure 2, une vue schématique d'un véhicule et d'un système d'aide à la conduite du véhicule selon un deuxième mode de réalisation, et
- figure 3, une vue schématique d'une partie du système d'aide à la conduite comprenant des éléments communs des premier et deuxième modes de réalisation.

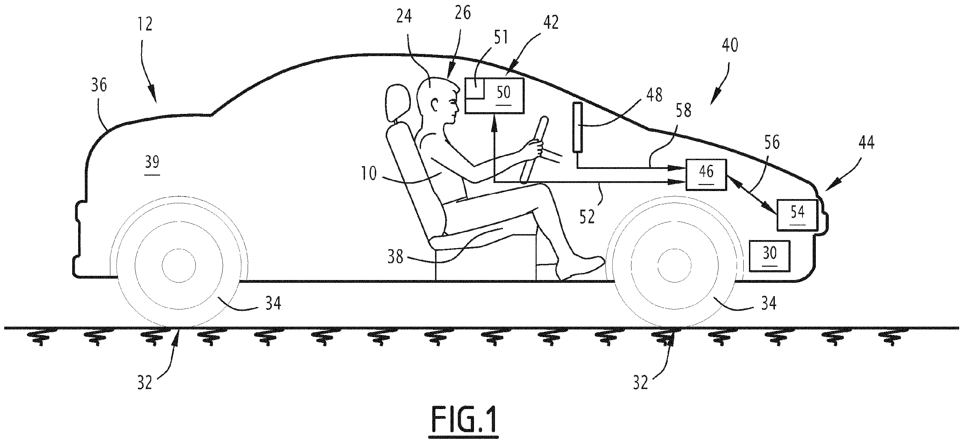

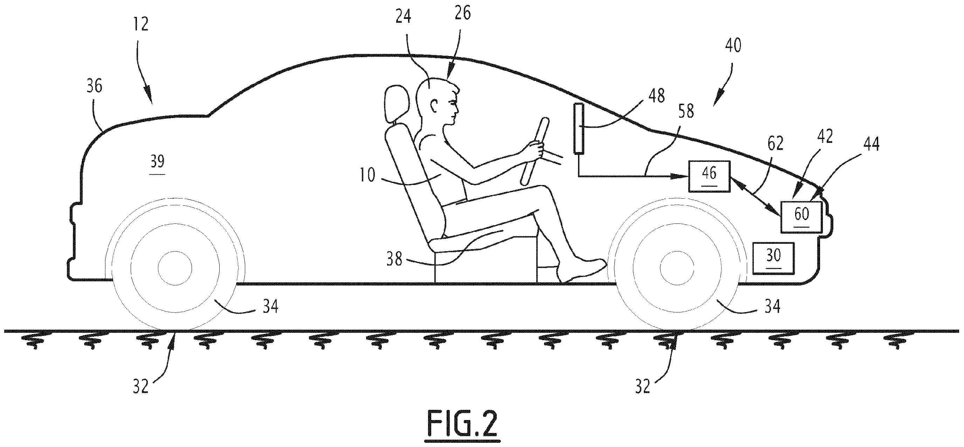

Un conducteur 10 et un véhicule 12 sont représentés sur les figures 1 et 2. Le conducteur 10 conduit le véhicule 12.

Le véhicule 12 est un véhicule mobile propre à se déplacer selon une trajectoire. La trajectoire de conduite du véhicule 12 est la direction de déplacement du véhicule 12 dans l'environnement.

Par le terme « conduire », il est entendu que le conducteur 10 collecte des informations sur l'environnement du véhicule 12 et effectue des actions modifiant la trajectoire et la vitesse du véhicule 12.

A titre d'exemple, lorsque le conducteur 10 voit un trou sur une chaussée sur laquelle le véhicule 12 circule, il va effectuer une manœuvre d'évitement du trou.

Le conducteur 10 comporte une tête 24 et deux yeux 26 pour collecter des informations sur l'environnement.

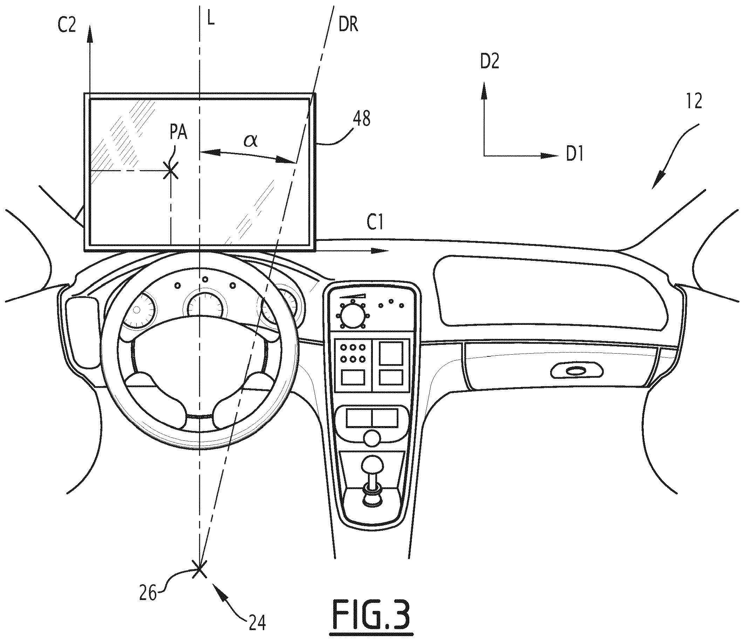

Pour les yeux 26, il est défini une direction de regard DR (visible sur la figure 3) du conducteur 10. Lorsque le conducteur 10 tourne la tête 24 autour d'un axe sensiblement vertical, la direction de regard DR varie dans un plan sensiblement horizontal. Similairement, lorsque le conducteur 10 tourne la tête 24 autour d'un axe sensiblement horizontal, la direction de regard DR varie dans un plan sensiblement vertical.

Pour des raisons de simplification, il est supposé dans ce qui suit que la direction de regard DR est fixe par rapport à la tête 24 du conducteur. Il est bien entendu compris que le conducteur 10 peut, par exemple, également modifier la direction de regard DR en bougeant les yeux, relativement à la tête 24.

La direction de regard DR est un premier paramètre dans l'exemple de la figure 1.

Pour le véhicule 12, il est défini une direction longitudinale L. La direction longitudinale L est définie par une droite passant par le milieu des essieux 32 arrière et des essieux 32 avant du véhicule 12.

Dans l'exemple de la figure 1, le véhicule 12 est une voiture.

Le véhicule 12 comprend un moteur 30, des essieux 32, des roues 34, une caisse 36 et des sièges 38.

En variante, non représentée, le véhicule 12 est un poids-lourd, un vélo, une motocyclette, bus ou tout autre véhicule 12 mobile de sol. En complément encore, non représenté, le véhicule 12 est un aéronef ou un bateau.

Le véhicule 12 comprend, en outre, un système d'aide à la conduite 40. Le système d'aide à la conduite 40 comprend, comme visible sur la figure 1, un premier ensemble de capteurs 42, un deuxième ensemble de capteurs 44, un calculateur 46 et un dispositif d'affichage 48.

Dans l'exemple de la figure 1, les premier et deuxième ensembles de capteurs 42, 44 sont des capteurs additionnels.

Le premier ensemble de capteurs 42 est propre à acquérir un premier paramètre correspondant à une première quantité à mesurer.

Le premier ensemble de capteurs 42 comprend, dans l'exemple de la figure 1, une caméra 50 et une unité de commande 51 de la caméra 50.

La caméra 50 comprend un détecteur d'images et un système optique. Par exemple, la caméra 50 est une caméra de lumière visible ou une caméra infra-rouge.

L'unité de commande 51 est, par exemple, un ordinateur.

Selon une variante, le premier ensemble de capteurs 42 comporte plus d'un capteur.

Le premier ensemble de capteurs 42 est connecté au calculateur 46 par une première liaison 52 permettant le transfert de données. La liaison 52 assure notamment l'échange d'informations entre le calculateur 46 et le premier ensemble de capteurs 42. Par exemple, la liaison 52 est un bus de données.

Le deuxième ensemble de capteurs 44 est propre à acquérir un deuxième paramètre correspondant à une deuxième quantité à mesurer.

Dans l'exemple de la figure 1, le deuxième paramètre est une distance mesurée.

Le deuxième ensemble de capteurs 44 comprend, dans l'exemple de la figure 1, une unité d'observation 54 de l'environnement. L'unité d'observation 54 est notamment configurée pour mesurer une distance à un autre usager de la route (non représenté) situé devant le véhicule 12.

L'autre usager de la route est, par exemple, un autre véhicule situé devant le véhicule 12.

L'unité d'observation 54 est un dispositif de prise d'image(s), comme un système radar (de l'anglais « *RAdio Detection And Ranging* » signifiant littéralement « détection électromagnétique et mesure de la distance »).

En variante, non représentée, l'unité d'observation 54 est un système lidar, un détecteur infrarouge ou une caméra.

Selon une variante, le deuxième ensemble de capteurs 44 comporte plus d'un capteur.

Le deuxième ensemble de capteurs 44 est connecté au calculateur 46 par une deuxième liaison 56, par exemple un bus de données, configuré pour assurer la transmission du deuxième paramètre au calculateur 46.

Le calculateur 46 est, par exemple, un ordinateur.

Le calculateur 46 est un calculateur électronique propre à manipuler et/ou transformer des données représentées comme des quantités électroniques ou physiques dans des registres du calculateur 46 et/ou des mémoires en d'autres données similaires correspondant à des données physiques dans des mémoires, des registres ou d'autres types de dispositifs d'affichage, de transmission ou de mémorisation.

Le calculateur 46 comporte un processeur comprenant une unité de traitement de données et des mémoires. Le calculateur 46 comprend, en outre, un lecteur de support d'informations configuré pour lire un programme d'ordinateur mémorisé sur un support lisible d'informations, non représenté. Le calculateur 46 comprend, en outre, un produit programme d'ordinateur comprenant des instructions de programme.

Le calculateur 46 est connecté par une troisième liaison 58, par exemple un bus de données, au dispositif d'affichage 48 pour afficher des données transmises par la troisième liaison 58.

Le dispositif d'affichage 48 est, dans l'exemple de la figure 1, un afficheur tête haute.

L'afficheur tête haute comprend une lame, une source de lumière et un module optique. La lame est un écran semi-transparent. Par l'expression « semi-transparent », il est entendu que l'environnement, notamment d'autres véhicules, est visible à travers la lame.

Selon un exemple, l'afficheur tête haute comprend un dispositif de génération d'images configuré pour produire des rayons lumineux transportant des images et une lame partiellement transparente configurée pour réfléchir les rayons lumineux en direction du conducteur 10 de manière à former des images virtuelles dans un champ de vision du conducteur 10. Les images virtuelles, comportant les informations à afficher, se superposent alors visuellement à l'environnement faisant face au véhicule 12.

La lame présente une zone d'affichage configurée pour l'affichage d'informations.

En variante, non représentée, la lame est une portion du pare-brise du véhicule 12. La lame sert à former l'image créée par le module optique.

En variante encore, la lame est formée par tout autre dispositif de type écran semi-transparent ou par des lunettes de réalité augmentée.

Le fonctionnement du système d'aide à la conduite 40 est maintenant décrit en référence à un exemple de mise en oeuvre du procédé d'aide à la conduite du véhicule 12 correspondant à la figure 1.

Il est défini une trajectoire court terme pour le véhicule 12 lorsque le véhicule 12 circule.

Le procédé comporte une étape d'acquisition, une étape de mesure, une étape de calcul, une étape de détermination et une étape d'affichage.

Lors d'une étape d'acquisition, le premier ensemble de capteurs 42, et notamment le capteur d'images 50, prend des images de la tête 24 du conducteur 10. Les images prises varient l'une par rapport à l'autre notamment en fonction de la direction de regard DR du conducteur 10.

Par exemple, le conducteur 10 modifie la direction de regard DR en fonction de la trajectoire court terme du véhicule 12.

A titre d'exemple, si le véhicule 12 effectue un virage, en suivant la trajectoire court terme, le conducteur 10 tourne la tête 24, et ainsi les yeux 26, en direction du virage afin de regarder en direction du sens de la marche.

Lorsque le virage de la trajectoire est compris dans un plan horizontal, la direction de regard DR est ainsi modifiée dans un plan sensiblement horizontal.

Par exemple, comme montré sur la figure 3, dans un virage à droite, le conducteur 10 tourne la tête 24 à droite. Un angle α est formé dans un plan horizontal entre la direction longitudinale L et la direction de regard DR. Plus le conducteur 10 tourne la tête 24, plus l'angle α augmente.

De manière analogue, dans un virage à gauche, le conducteur 10 tourne la tête 24 à gauche, et la direction de regard DR tourne, d'un point de vue du conducteur 10, à gauche.

On définit, en outre, une direction de regard calculée. La direction de regard calculée, adaptée à la situation de conduite, est, selon l'exemple de la figure 1, définie à partir de la proximité à un autre usager de la route situé devant le véhicule 12.

Notamment, la direction de regard calculée n'est pas la direction de regard DR réelle instantanée. Par exemple, l'unité de commande 51 filtre la direction de regard DR afin d'obtenir la direction de regard calculée. Par exemple, la direction de regard DR change avec une fréquence élevée, et la direction de regard calculée change moins fréquemment.

Dans un exemple, la direction de regard calculée est la direction de regard DR filtrée spatialement. Par exemple, si la direction de regard DR présente des modifications d'angle inférieures à un seuil prédéterminé, la direction de regard calculée reste fixe. Le seuil est, par exemple, de 10 degrés. En d'autres termes, si la direction de regard diverge de moins de 10 degrés par rapport à une direction de regard fixe par rapport au dispositif d'affichage 48, la direction de regard calculée reste fixe.

En d'autres termes, selon un exemple, la direction de regard calculée est la direction de regard DR filtrée temporellement. En particulier, des mouvements de la direction de regard qui sont supérieurs à une fréquence de seuil prédéfini, sont atténués ou supprimés pour obtenir la direction de regard DR filtrée.

L'unité de commande 51 détermine, à partir des images captées, la direction de regard calculée.

Par exemple, l'unité de commande 51 met en oeuvre un algorithme de reconnaissance d'images permettant d'obtenir, par exemple, la position et l'orientation de la tête 24 du conducteur 10.

L'unité de commande 51 filtre la direction de regard DR et détermine alors la direction de regard calculée par rapport à une direction longitudinale L du véhicule 12. Notamment, l'unité de commande 51 détermine l'angle α (visible sur la figure 3).

La direction de regard calculée est le premier paramètre dans l'exemple de la figure 1. Le premier paramètre est, à titre d'exemple, l'angle a.

Le premier ensemble de capteurs 42 transmet ensuite la direction de regard calculée (c'est-à-dire l'angle a) au calculateur 46 via la première liaison 52.

Lors de l'étape de mesure, l'unité d'observation 54 détecte un ou des véhicules dans l'environnement et détermine la distance du véhicule 12 au(x) véhicule(s) détecté(s).

Pour cela, l'unité d'observation 54 du deuxième ensemble de capteurs 44, et en particulier un émetteur de l'unité d'observation 54 émet des ondes électromagnétiques dans l'environnement et un détecteur de l'unité d'observation 54 détecte une partie des ondes réfléchies sur la surface du véhicule détecté.

Puis, le deuxième ensemble de capteurs 44 transmet la distance au véhicule le plus proche détecté ainsi obtenue via la deuxième liaison 56 au calculateur 46.

L'étape de mesure et l'étape d'acquisition sont, par exemple, mises en œuvre plusieurs fois.

De préférence, l'étape de mesure et l'étape d'acquisition sont mises en œuvre simultanément.

Selon le premier mode de réalisation, par exemple, le premier paramètre est une mesure acquise par le capteur d'images 50 et le deuxième paramètre est, par exemple, une mesure acquise par l'unité d'observation 54. Celle-ci est configurée pour mesurer une distance du véhicule 12 à un autre usager de la route précédant le véhicule 12.

Le calculateur 46 détermine alors une position pour afficher une information sur le dispositif d'affichage 48. L'information est, en particulier, une information d'aide à la conduite. Par exemple, l'information est un panneau de signalisation, un état du véhicule 12, une condition météorologique, une vitesse véhicule, une limite de vitesse, une consigne du limitateur ou un limitateur de vitesse, une distance de consigne du régulateur de vitesse adaptatif ou une information de navigation telle qu'une vignette de navigation.

Toutes les informations d'aide à la conduite ne sont pas forcément concernées. Par exemple, il peut y avoir des informations fixes par rapport au dispositif d'affichage 48 et d'autres informations mobiles par rapport au dispositif d'affichage 48 selon le procédé de l'invention.

Le calculateur 46 est propre à enregistrer des informations qui sont mobiles ou fixes par rapport au dispositif d'affichage 48. Les informations fixes sont, par exemple, toujours disposées au même endroit sur le dispositif d'affichage.

Notamment, les informations sont générées par un deuxième calculateur (non représenté) distinct du calculateur 46. Les informations, fixes ou mobiles, sont susceptibles d'être affichées sur le dispositif d'affichage 48.

Les étapes suivantes de calcul et de détermination visent à obtenir une position d'affichage à laquelle il est favorable d'afficher l'information pour s'assurer que le conducteur 10 en prenne connaissance. La position d'affichage est visible sur la figure 3 et est noté PA.

La position d'affichage PA a pour coordonnées une première coordonnée C1 (voir figure 3) selon une première direction D1 sur le dispositif d'affichage 48 et une deuxième coordonnée C2 selon une deuxième direction D2 sur le dispositif d'affichage 48.

Comme visible sur la figure 3, la deuxième direction D2 est perpendiculaire à la première direction D1.

Par exemple, la première direction D1 est une direction horizontale et la deuxième direction D2 est une direction verticale.

La deuxième direction D2 est une direction d'élévation par rapport à un plan de roulement dans lequel le véhicule 12 est destiné à circuler. Les termes «supérieur» et « inférieur » sont définis par rapport au plan de roulement. Les termes « supérieur » et « inférieur » sont notamment définis selon la direction d'élévation. Par exemple, si le véhicule 12 est disposé sur une route horizontale, une première position est supérieure à une deuxième position si la première position présente une altitude plus élevée que la deuxième position.

Comme visible sur la figure 3, la direction horizontale correspond à l'abscisse (première coordonnée C1), et la direction verticale correspond à l'ordonnée (deuxième coordonnée C2).

Lors de l'étape de calcul, la première coordonnée C1 est calculée et lors de l'étape de détermination, la deuxième coordonnée C2 est déterminée.

Lors de l'étape de calcul, la première coordonnée C1 selon la première direction D1 sur le dispositif d'affichage 48 est calculée comme le résultat d'une première fonction f1 appliquée au premier paramètre.

Autrement formulé, le calculateur 46 utilise la première fonction f1 pour calculer la première coordonnée C1.

En l'espèce, la première fonction f1 dépend de la direction de regard DR du conducteur 10.

La première fonction f1 peut présenter diverses propriétés décrites dans ce qui suit.

Par exemple, la première fonction f1 est une fonction monotone.

En variante, la première fonction f1 est une fonction linéaire.

Dans ce qui suit, il est supposé que la première fonction f1 est la fonction qui à la variable x associe 1,2.x c'est-à-dire que f1(x) = 1,2x.

Une telle première fonction f1 implique que, lorsque l'angle α augmente (i.e. le conducteur 10 tourne la tête 24 à droite), la première coordonnée C1 augmente de manière proportionnelle au changement de l'angle a.

Lors de l'étape de détermination, la deuxième coordonnée C2 selon la deuxième direction D2 sur le dispositif d'affichage 48 est obtenue comme le résultat d'une première fonction f2 appliquée au premier paramètre.

Autrement formulé, le calculateur 46 utilise notamment la deuxième fonction f2 pour déterminer la deuxième coordonnée C2 sur le dispositif d'affichage 48.

La deuxième fonction f2 dépend, dans l'exemple représenté, de la distance au véhicule détecté.

La deuxième fonction f2 présente, de préférence, des mêmes caractéristiques que la première fonction f1.

En variante, la deuxième fonction f2 est de type distinct de la première fonction f1.

Par exemple, il est supposé que la deuxième fonction f2 est la fonction qui à la variable x associe 0,98.x c'est-à-dire que f2(x) = 0,98x.

Une telle deuxième fonction f2 implique que, si la deuxième fonction f2 est une fonction linéaire, et la distance à un véhicule augmente linéairement, la deuxième coordonnée C2 augmente linéairement.

Lors de l'étape d'affichage, le dispositif d'affichage 48 affiche l'information d'aide à la conduite à la position d'affichage PA ayant pour coordonnées la première coordonnée C1 et la deuxième coordonnée C2 sur le dispositif d'affichage 48.

Il en résulte que la position d'affichage PA varie au cours du temps.

Par exemple, si la direction de regard DR tourne, d'un point de vue du conducteur 10, à gauche, la première coordonnée C1 sur le dispositif d'affichage 48 se déplace à gauche.

Dans un autre exemple, si la direction de regard DR tourne à droite d'un point de vue du conducteur 10, la première coordonnée C1 sur le dispositif d'affichage 48 se déplace à droite.

De préférence, si la direction de regard DR du conducteur 10 est, par exemple, orientée, d'un point de vue du conducteur 10, à droite du dispositif d'affichage 48, la première coordonnée C1 est située à une extrémité droite du dispositif d'affichage 48. Si la direction de regard DR du conducteur 10 est, par exemple, orientée, d'un point de vue du conducteur 10, à gauche du dispositif d'affichage 48, la première coordonnée C1 est située à une extrémité gauche du dispositif d'affichage 48.

Ainsi, le procédé permet de réduire le risque que le conducteur 10 n'aperçoive pas des informations pertinentes pour la conduite. Notamment, par l'adaptation en continue de la position d'affichage PA de l'information, l'information pertinente est affichée à proximité de la direction de regard DR du conducteur 10. En conséquence, le conducteur 10 aperçoit mieux l'information pertinente.

Par exemple, lorsque la première fonction f1 et la deuxième fonction f2 sont chacune une fonction linéaire, la première coordonnée C1 et la deuxième coordonnée C2 varient de manière linéaire par rapport au premier paramètre et au deuxième paramètre. La position d'affichage PA variant au fur et à mesure, cela permet un bon suivi par le conducteur 10 de l'information affichée à la position d'affichage PA.

En même temps, la vue du conducteur 10 n'est pas dérangée par les informations affichées, puisqu'elles sont affichées à proximité de la direction de regard DR du conducteur 10. Par exemple, la position d'affichage PA est décalée par rapport à la direction de regard DR, et notamment par rapport à la direction de regard calculée. Par exemple, un écart angulaire horizontal est maintenu entre la position d'affichage PA et la direction de regard calculée, par exemple un angle de 2°.

Par exemple, un écart angulaire vertical de 2° est maintenu entre la position d'affichage PA et la direction de regard calculée.

Le fait de maintenir des écarts angulaires permet d'éviter que les informations masquent la scène de conduite.

En particulier, le fait que la position de l'affichage PA de l'information varie sur le dispositif d'affichage 48 permet au conducteur 10 de mieux suivre l'information. Notamment, le fait que la position d'affichage évolue au cours du temps, permet une meilleure perception de l'information affichée par le conducteur 10.

En conséquence, le système d'aide à la conduite 40 et le procédé associé permettent d'améliorer la sécurité routière.

Un deuxième mode de réalisation de l'invention est représenté sur la figure 2. Dans ce qui suit, les éléments identiques du deuxième mode de réalisation par rapport au premier mode de réalisation ne sont pas répétés. Seules les différences par rapport au premier mode de réalisation sont mises en évidence.

Le véhicule 12 comprend, en outre, un dispositif de mesure (non représenté) connecté au volant. Le dispositif de mesure est configuré pour mesurer la trajectoire du véhicule 12. En particulier, le dispositif de mesure est configuré pour mesurer l'angle de braquage.

Dans l'exemple de la figure 2, le système d'aide à la conduite 40 comprend un module de détermination de l'état 60 de véhicule 12, le calculateur 46 et le dispositif d'affichage 48.

Le module de détermination de l'état 60 est connecté par une quatrième liaison 62, par exemple un bus de données, au calculateur 46. Le calculateur 46 est connecté au dispositif d'affichage 48 par la troisième liaison 58.

Le module détermination de l'état 60 de l'exemple de la figure 2 forme le premier ensemble de capteurs 42 et le deuxième ensemble de capteurs 44.

Le module de détermination de l'état 60 comprend une pluralité de capteurs pour la mesure d'un ou plusieurs états du véhicule 12. Par l'expression « état du véhicule », il est entendu un paramètre de la conduite du véhicule 12.

Par exemple, un état du véhicule 12 est l'angle de braquage ou une vitesse actuelle du véhicule 12.

Dans l'exemple de figure 2, le module de détermination de l'état 60 comprend le dispositif de mesure de l'angle de braquage.

Le dispositif de mesure de l'angle de braquage est configuré pour mesurer un angle de braquage du véhicule 12.

Dans le mode de réalisation de la figure 2, l'angle de braquage est le premier paramètre tandis que la direction de regard DR, et notamment la direction de regard calculée, est le premier paramètre dans le mode de réalisation de la figure 1.

Selon le deuxième mode de réalisation, représenté sur la figure 2, la direction de regard calculée est définie à partir de la vitesse véhicule.

Dans le mode de réalisation de la figure 2, le module de détermination de l'état 60 comprend, en outre, un capteur de vitesse configuré pour mesurer la vitesse du véhicule 12.

Le capteur de vitesse est, par exemple, un tachymètre.

Dans le mode de réalisation de la figure 2, la vitesse mesurée est le deuxième paramètre tandis que la distance au véhicule détecté est le deuxième paramètre dans le mode de réalisation de la figure 1.

D'autres modes de réalisation du capteur de vitesse peuvent être envisagés.

Le capteur de vitesse est, par exemple, formé par un capteur GPS (de l'anglais « Global Positioning System » ou littéralement « système de géolocalisation ») ou tout autre dispositif apte à déterminer la vitesse du véhicule 12.

Le procédé d'aide à la conduite dans le deuxième mode de réalisation décrit en référence à la figure 2 est maintenant explicité.

Selon le deuxième mode de réalisation, les étapes identiques au premier mode de réalisation du procédé ne sont pas détaillées à nouveau dans ce qui suit. Seules les différences par rapport au premier mode de réalisation sont mises en évidence.

Dans le deuxième mode de réalisation, lors de l'étape de mesure, le module de détermination de l'état 60, et notamment le dispositif de mesure de l'angle de braquage, mesure l'angle de braquage du véhicule 12.

Lors de l'étape d'acquisition, le capteur de vitesse du module de détermination de l'état 60 mesure la vitesse du véhicule 12.

A titre d'exemple, la première fonction et la deuxième fonction sont les fonctions telles que décrites selon le premier mode de réalisation.

Selon le deuxième mode de réalisation, le premier paramètre est, par exemple, issu du dispositif de mesure. Le dispositif de mesure est notamment configuré pour mesurer l'angle de braquage. Le deuxième paramètre est, par exemple, issu du capteur de vitesse. Le capteur de vitesse est configuré pour mesurer la vitesse du véhicule 12. En résumé, seuls les premier et deuxième paramètres changent entre le procédé selon le premier mode de réalisation et le deuxième mode de réalisation. Cela signifie que chacun des modes de réalisation du procédé a en commun l'utilisation d'un premier paramètre et d'un deuxième paramètre.

Dans chacun des cas, le premier paramètre est un paramètre relatif à la trajectoire court terme du véhicule 12.

Par « trajectoire court terme », il est entendu la trajectoire suivie par le véhicule 12 dans un intervalle de temps présentant une durée d'au plus 10 secondes, préférablement au plus 5 secondes.

Par exemple, la trajectoire court terme est la trajectoire suivie par le véhicule 12 dans un intervalle de temps présentant une durée strictement inférieure à 10 secondes, par exemple d'une durée d'au plus 5 secondes.

Dans chacun des cas, le deuxième paramètre est un paramètre relatif à la densité du trafic sur une route sur laquelle le véhicule 12 est destiné à circuler.

La densité de trafic est, par exemple, définie par le nombre de voitures qui circulent en même temps sur une section définie d'une route. La densité de trafic est, par exemple, fonction d'une distance du véhicule 12 à un autre usager de la route situé devant le véhicule 12 et/ou fonction de la vitesse du véhicule 12.

Selon un premier cas, la densité de trafic est élevée. Ceci est, par exemple, le cas lorsque le véhicule 12 circule dans un embouteillage. Dans un tel cas, la distance du véhicule 12 à un autre usager de la route précédant le véhicule 12 est faible.

Selon un deuxième cas, la densité de trafic est faible par rapport au premier exemple. Cela correspond au fait que la circulation est plus fluide selon le deuxième cas. La distance du véhicule 12 à un autre usager de la route précédant le véhicule 12 est alors élevée par rapport à la distance du premier cas.

Dans un autre cas, si la vitesse du véhicule 12 est élevée, la circulation est fluide, et la densité de trafic est ainsi faible par rapport à un cas dans lequel le véhicule 12 circule avec une vitesse réduite.

Pour la suite, il est supposé que le véhicule 12 circule avec une vitesse élevée. En même temps, si le véhicule 12 circule avec une vitesse élevée, les véhicules dans l'environnement du véhicule 12 sont susceptibles de présenter une distance élevée au véhicule 12, notamment par mesure de sécurité (distance de sécurité).

Ainsi, le fait que le véhicule 12 circule avec une vitesse élevée correspond à la même réalité physique que le fait que la densité du trafic est faible.

Similairement, si le véhicule 12 circule avec une vitesse réduite, les voitures dans l'environnement du véhicule 12 peuvent être plus proches, la densité du trafic est ainsi élevée

Si le véhicule 12 circule avec une vitesse élevée, le conducteur 10 regarde un point présentant une distance élevée au véhicule 12.

La prise en compte du deuxième paramètre relatif à la densité du trafic permet d'adapter la deuxième coordonnée C2 de la position d'affichage PA.

Pour déterminer la deuxième coordonnée C2, par exemple, à la densité de trafic est associée la direction de regard calculée. La direction de regard calculée est haute si le trafic est fluide et basse si le trafic est dense.

La direction de regard calculée, adaptée à la situation de conduite, est, selon l'exemple de la figure 1, définie à partir de la proximité à un autre usager de la route situé devant le véhicule 12 et, selon l'exemple de la figure 2, à partir de la vitesse du véhicule 12. Notamment, la direction de regard calculée n'est pas la direction de regard DR réelle instantanée. Par exemple, la direction de regard DR est filtrée pour obtenir la direction de regard calculée.

La deuxième coordonnée C2 dépend ainsi, par exemple, de la proximité à un autre usager de la route situé devant le véhicule 12 et/ou de la vitesse du véhicule 12.

Par exemple, la deuxième fonction f2 est telle que si la densité du trafic diminue, la deuxième coordonnée C2 se déplace, suivant la deuxième direction D2 entre une première position et une deuxième position, la deuxième position étant plus haute que la première position (la hauteur est considérée par rapport au plan de roulement dans lequel le véhicule 12 est destiné à circuler).

Similairement, la deuxième fonction f2 est telle que si la densité du trafic augmente, la deuxième coordonnée C2 se déplace, suivant la deuxième direction D2 entre une troisième position et une quatrième position, la troisième position étant plus haute que la quatrième position (la hauteur est considérée par rapport au plan de roulement dans lequel le véhicule 12 est destiné à circuler).

La première coordonnée C1 (notamment selon la direction horizontale) dépend, selon l'exemple de la figure 1, de la direction de regard calculée et/ou, selon l'exemple de la figure 2, de l'angle de braquage.

Par exemple, si le véhicule 12 suit un virage à droite, en suivant la trajectoire court terme, lors du calcul de la première coordonnée C1, la première coordonnée C1 est décalée vers la droite.

Par exemple, si le véhicule 12 suit un virage à gauche, en suivant la trajectoire court terme, lors du calcul de la première coordonnée C1, la première coordonnée C1 est décalée vers la gauche.

D'autres modes de réalisation peuvent être envisagés.

Notamment, le premier paramètre et le deuxième paramètre peuvent être mesurés ou acquis par d'autres dispositifs installés dans le véhicule 12.

Selon un autre exemple, le premier paramètre est fonction de deux mesures, par exemple de la direction de regard calculée et de l'angle de braquage.

Dans un autre mode de réalisation, le deuxième paramètre est fonction de deux mesures relatives à la densité du trafic, par exemple de la vitesse du véhicule 12 et de la distance du véhicule 12 à un autre usager de la route situé devant le véhicule 12.

Dans un autre mode de réalisation, non représenté, la première direction D1 et/ou la deuxième direction D2 sont différentes pour prendre en compte de spécificités d'une surface d'affichage. Par exemple, dans ce mode de réalisation, la première direction D1 est verticale et la deuxième direction D2 est horizontale.

Dans un autre mode de réalisation, plusieurs informations sont affichées simultanément.

Par exemple, une première information est affichée à une position d'affichage fixe sur le dispositif d'affichage 48 et une deuxième information est affichée à une autre position d'affichage. Par exemple, l'autre position d'affichage évolue au cours du temps.

Une combinaison des modes de réalisation précédents lorsqu'elle est techniquement possible est également envisageable.

## Revendications

1. Procédé d'aide à la conduite d'un conducteur (10) d'un véhicule (12), le véhicule (12) suivant une trajectoire dans un environnement, le véhicule (12) comprenant un dispositif d'affichage (48), le procédé comprenant au moins les étapes de :
- acquisition d'un premier paramètre relatif à une trajectoire court terme du véhicule (12), la trajectoire court terme étant la trajectoire suivie par le véhicule (12) dans un intervalle de temps présentant une durée d'au plus 10 secondes, préférablement au plus 5 secondes ;
- mesure d'un deuxième paramètre relatif à la densité du trafic dans l'environnement du véhicule (12),
**caractérisé en ce que** le procédé comprend, en outre, les étapes de :
- calcul d'une première coordonnée (C1) selon une première direction (D1) sur le dispositif d'affichage (48) comme étant le résultat d'une première fonction (f1) appliquée au premier paramètre ;
- détermination d'une deuxième coordonnée (C2) selon une deuxième direction (D2) sur le dispositif d'affichage (48) comme étant le résultat d'une deuxième fonction (f2) appliquée au deuxième paramètre, la deuxième direction (D2) étant perpendiculaire à la première direction (D1), et
- affichage d'une information d'aide à la conduite à une position d'affichage (PA) sur le dispositif d'affichage (48), la position d'affichage (PA) ayant pour coordonnées la première coordonnée (C1) selon la première direction (D1) et la deuxième coordonnée (C2) selon la deuxième direction (D2).

2. Procédé d'aide à la conduite selon la revendication 1, dans lequel le premier paramètre est au moins l'un parmi une direction de regard calculée du conducteur (10) et un angle de braquage du véhicule.

3. Procédé d'aide à la conduite selon la revendication 1 ou 2, dans lequel le deuxième paramètre est au moins l'un parmi une distance du véhicule (12) à un autre usager de la route situé devant le véhicule (12) et la vitesse du véhicule (12).

4. Procédé d'aide à la conduite selon l'une quelconque des revendications 1 à 3, dans lequel, si le véhicule (12) suit un virage correspondant à une direction de virage choisie parmi un virage à droite et un virage à gauche, la première coordonnée (C1) est décalée en suivant la direction de virage.

5. Procédé d'aide à la conduite selon l'une quelconque des revendications 1 à 4, dans lequel, la deuxième fonction (f2) est telle que :
- lorsque la densité du trafic diminue, la deuxième coordonnée (C2) se déplace, suivant la deuxième direction (D2), d'une première position à une deuxième position supérieure à la première position par rapport à un plan de roulement dans lequel le véhicule (12) est destiné à circuler, et
- lorsque la densité du trafic augmente, la deuxième coordonnée (C2) se déplace, suivant la deuxième direction (D2), selon la deuxième fonction (f2), d'une troisième position à une quatrième position inférieure à la troisième position par rapport au plan de roulement.

6. Procédé d'aide à la conduite selon l'une quelconque des revendications 1 à 5, dans lequel le premier paramètre est une mesure acquise par un capteur d'images (50) et dans lequel le deuxième paramètre est une mesure acquise par une unité d'observation (54) configurée pour mesurer une distance du véhicule (12) à un autre usager de la route situé devant le véhicule (12).

7. Procédé d'aide à la conduite selon l'une quelconque des revendications 1 à 5, dans lequel le premier paramètre est issu d'un dispositif de mesure configuré pour mesurer l'angle de braquage et le deuxième paramètre est issu d'un capteur de vitesse configuré pour mesurer la vitesse du véhicule (12).

8. Système d'aide à la conduite (40) d'un conducteur (10) d'un véhicule (12), le véhicule (12) comprenant un dispositif d'affichage (48), le système d'aide à la conduite (40) comprenant :
- un premier ensemble de capteurs (42) propre à acquérir un premier paramètre relatif à une trajectoire court terme du véhicule (12), la trajectoire court terme étant la trajectoire suivie par le véhicule (12) dans un intervalle de temps présentant une durée d'au plus 10 secondes, préférablement au plus 5 secondes ;
- un deuxième ensemble de capteurs (44) propre à acquérir un deuxième paramètre relatif à la densité du trafic ;
**caractérisé en ce que** le système d'aide à la conduite (40) comprend, en outre :
- un calculateur (46) configuré pour calculer une première coordonnée (C1) selon une première direction (D1) sur le dispositif d'affichage (48) comme étant le résultat d'une première fonction (f1) appliquée au premier paramètre, le calculateur (46) étant, en outre, configuré pour calculer une deuxième coordonnée (C2) selon une deuxième direction (D2) sur le dispositif d'affichage (48) comme étant le résultat d'une deuxième fonction (f2) appliquée au deuxième paramètre, la deuxième direction (D2) étant perpendiculaire à la première direction (D1), et
le dispositif d'affichage (48) étant configuré pour afficher une information d'aide à la conduite à une position d'affichage (PA) sur le dispositif d'affichage (48), la position d'affichage (PA), ayant pour coordonnées la première coordonnée (C1) selon la première direction (D1) et la deuxième coordonnée (C2) selon la deuxième direction (D2).

9. Véhicule (12) comprenant le système d'aide à la conduite (40) selon la revendication 8.

## Patentansprüche

1. Fahrassistenzverfahren eines Fahrers (10) eines Fahrzeugs (12), wobei das Fahrzeug (12) einer Bahn in einer Umgebung folgt, das Fahrzeug (12) umfassend eine Anzeigevorrichtung (48), das Verfahren umfassend mindestens die folgenden Schritte:
- Erfassen eines ersten Parameters in Bezug auf eine kurzfristige Bahn des Fahrzeugs (12), wobei die kurzfristige Bahn die Bahn ist, der das Fahrzeug (12) in einem Zeitintervall folgt, das eine Dauer von höchstens 10 Sekunden, vorzugsweise höchstens 5 Sekunden, aufweist;
- Messen eines zweiten Parameters in Bezug auf die Verkehrsdichte in der Umgebung des Fahrzeugs (12),
**dadurch gekennzeichnet, dass** das Verfahren ferner die folgenden Schritte umfasst:
- Berechnen einer ersten Koordinate (C1) entlang einer ersten Richtung (D1) auf der Anzeigevorrichtung (48) als Resultat einer ersten Funktion (f1), die auf den ersten Parameter angewendet wird;
- Bestimmen einer zweiten Koordinate (C2) in einer zweiten Richtung (D2) auf der Anzeigevorrichtung (48) als Resultat einer zweiten Funktion (f2), die auf den zweiten Parameter angewendet wird, wobei die zweite Richtung (D2) senkrecht zu der ersten Richtung (D1) ist, und
- Anzeigen von Fahrassistenzinformationen an einer Anzeigeposition (PA) auf der Anzeigevorrichtung (48), wobei die Anzeigeposition (PA) als Koordinaten die erste Koordinate (C1) in der ersten Richtung (D1) und die zweite Koordinate (C2) in der zweiten Richtung (D2) aufweist.

2. Fahrassistenzverfahren nach Anspruch 1, wobei der erste Parameter mindestens einer von einer berechneten Blickrichtung des Fahrers (10) und einem Lenkwinkel des Fahrzeugs ist.

3. Fahrassistenzverfahren nach Anspruch 1 oder 2, wobei der zweite Parameter mindestens einer von einem Abstand des Fahrzeugs (12) zu einem anderen Verkehrsteilnehmer, der sich vor dem Fahrzeug (12) befindet, und der Geschwindigkeit des Fahrzeugs (12) ist.

4. Fahrassistenzverfahren nach einem der Ansprüche 1 bis 3, wobei, wenn das Fahrzeug (12) eine Kurve fährt, die einer Kurvenrichtung entspricht, die aus einer Rechtskurve und einer Linkskurve ausgewählt ist, die erste Koordinate (C1) entlang der Kurvenrichtung verschoben wird.

5. Fahrassistenzverfahren nach einem der Ansprüche 1 bis 4, wobei die zweite Funktion (f2) derart ist, dass:
- wenn die Verkehrsdichte abnimmt, sich die zweite Koordinate (C2) entlang der zweiten Richtung (D2) von einer ersten Position in eine zweite Position, die größer als die erste Position ist, in Bezug auf eine Fahrebene, in der das Fahrzeug (12) fahren soll, bewegt und
- wenn die Verkehrsdichte zunimmt, sich die zweite Koordinate (C2) entlang der zweiten Richtung (D2) gemäß der zweiten Funktion (f2) von einer dritten Position zu einer vierten Position, die niedriger als die dritte Position in Bezug auf die Fahrebene ist, bewegt.

6. Fahrassistenzverfahren nach einem der Ansprüche 1 bis 5, wobei der erste Parameter eine von einem Bildsensor (50) erfasste Messung ist und wobei der zweite Parameter eine von einer Beobachtungseinheit (54) erfasste Messung ist, die konfiguriert ist, um einen Abstand des Fahrzeugs (12) zu einem anderen Verkehrsteilnehmer zu messen, der sich vor dem Fahrzeug (12) befindet.

7. Fahrassistenzverfahren nach einem der Ansprüche 1 bis 5, wobei der erste Parameter von einer Messvorrichtung stammt, die konfiguriert ist, um den Lenkwinkel zu messen, und der zweite Parameter von einem Geschwindigkeitssensor stammt, der konfiguriert ist, um die Geschwindigkeit des Fahrzeugs (12) zu messen.

8. Fahrassistenzsystem (40) für einen Fahrer (10) eines Fahrzeugs (12), das Fahrzeug (12) umfassend eine Anzeigevorrichtung (48), das Fahrassistenzsystem (40) umfassend:
- eine erste Gruppe von Sensoren (42), die einen ersten Parameter in Bezug auf eine kurzfristige Bahn des Fahrzeugs (12) erfassen können, wobei die kurzfristige Bahn die Bahn ist, der das Fahrzeug (12) in einem Zeitintervall folgt, das eine Dauer von höchstens 10 Sekunden, vorzugsweise höchstens 5 Sekunden, aufweist;
- eine zweite Gruppe von Sensoren (44), die geeignet sind, um einen zweiten Parameter in Bezug auf die Verkehrsdichte zu erfassen;
**dadurch gekennzeichnet, dass** das Fahrassistenzsystem (40) ferner Folgendes umfasst:
- einen Rechner (46), der konfiguriert ist, um eine erste Koordinate (C1) in einer ersten Richtung (D1) auf der Anzeigevorrichtung (48) als Resultat einer ersten Funktion (f1) zu berechnen, die auf den ersten Parameter angewendet wird, wobei der Rechner (46) ferner konfiguriert ist, um eine zweite Koordinate (C2) in einer zweiten Richtung (D2) auf der Anzeigevorrichtung (48) als Resultat einer zweiten Funktion (f2) zu berechnen, die auf den zweiten Parameter angewendet wird, wobei die zweite Richtung (D2) senkrecht zu der ersten Richtung (D1) ist; und
wobei die Anzeigevorrichtung (48) konfiguriert ist, um Fahrassistenzinformationen an einer Anzeigeposition (PA) auf der Anzeigevorrichtung (48) anzuzeigen, wobei die Anzeigeposition (PA) als Koordinaten die erste Koordinate (C1) in der ersten Richtung (D1) und die zweite Koordinate (C2) in der zweiten Richtung (D2) aufweist.

9. Fahrzeug (12), umfassend das Fahrassistenzsystem (40) nach Anspruch 8.

## Claims

1. A driving assistance method for a driver (10) of a vehicle (12), the vehicle (12) following a path in an environment, the vehicle (12) comprising a display device (48), the method comprising at least the steps of:
- acquiring a first parameter relating to a short-term trajectory of the vehicle (12), the short-term trajectory being the trajectory followed by the vehicle (12) in a time interval having a duration of at most 10 seconds, preferably at most 5 seconds;
- measuring a second parameter relating to the traffic density in the vehicle's (12) environment,
**characterised in that** the method further comprises the steps of:
- calculating a first coordinate (C1) along a first direction (D1) on the display device (48) as the result of a first function (f1) applied to the first parameter;
- determining a second coordinate (C2) along a second direction (D2) on the display device (48) as the result of a second function (f2) applied to the second parameter, the second direction (D2) being perpendicular to the first direction (D1), and
- displaying driving assistance information at a display position (PA) on the display device (48), the display position (PA) having the first coordinate (C1) in the first direction (D1) and the second coordinate (C2) in the second direction (D2) as coordinates.

2. The driving assistance method according to claim 1, wherein the first parameter is at least one of either a calculated viewing direction of the driver (10) or a steering angle of the vehicle.

3. The driving assistance method according to claim 1 or 2, wherein the second parameter is at least one of either a distance of the vehicle (12) from another road user in front of the vehicle (12) or the speed of the vehicle (12).

4. The driving assistance method according to any one of claims 1 to 3, wherein, if the vehicle (12) follows a turn corresponding to a turn direction selected from a right turn and a left turn, the first coordinate (C1) is shifted along the turn direction.

5. The driving assistance method according to any one of claims 1 to 4, wherein the second function (f2) is such that:
- as the traffic density decreases, the second coordinate (C2) moves, along the second direction (D2), from a first position to a second position higher than the first position with respect to a running plane in which the vehicle (12) is intended to travel, and
- as the traffic density increases, the second coordinate (C2) moves, along the second direction (D2), according to the second function (f2), from a third position to a fourth position lower than the third position with respect to the running plane.

6. The driving assistance method according to any one of claims 1 to 5, wherein the first parameter is a measurement acquired by an image sensor (50) and wherein the second parameter is a measurement acquired by an observation unit (54) configured to measure a distance from the vehicle (12) to another road user located in front of the vehicle (12).

7. The driving assistance method according to any one of claims 1 to 5, wherein the first parameter is derived from a measuring device configured to measure the steering angle and the second parameter is derived from a speed sensor configured to measure the speed of the vehicle (12).

8. A driving assistance system (40) for a driver (10) of a vehicle (12), the vehicle (12) comprising a display (48), the driving assistance system (40) comprising:
- a first set of sensors (42) able to acquire a first parameter relating to a short-term trajectory of the vehicle (12), the short-term trajectory being the trajectory followed by the vehicle (12) in a time interval having a duration of at most 10 seconds, preferably at most 5 seconds;
- a second set of sensors (44) capable of acquiring a second parameter relating to traffic density;
**characterised in that** the driving assistance system (40) further comprises:
- a computer (46) configured to calculate a first coordinate (C1) in a first direction (D1) on the display device (48) as being the result of a first function (f1) applied to the first parameter, the computer (46) being further configured to calculate a second coordinate (C2) in a second direction (D2) on the display device (48) as being the result of a second function (f2) applied to the second parameter, the second direction (D2) being perpendicular to the first direction (D1); and
the display device (48) being configured to display driving assistance information at a display position (PA) on the display device (48), the display position (PA) having the first coordinate (C1) in the first direction (D1) and the second coordinate (C2) in the second direction (D2) as coordinates.

9. A vehicle (12) comprising the driving assistance system (40) according to claim 8.
